# EUROPEAN PATENT SPECIFICATION

(11) **EP 1 861 968 B1**
(45) Date of publication and mention of the grant of the patent: **18.04.2012**
(21) Application number: 06738049.3
(22) Date of filing: 10.03.2006
(51) Int. Cl.: H04L 1/00

(54) **IMPROVING CONTROL INFORMATION ACQUISITION LATENCY BY TRANSMITTING CONTROL INFORMATION IN INDIVIDUALLY DECODE-ABLE PACKETS**
VERBESSERN DER LATENZZEIT DER ERFASSUNG VON STEUERINFORMATIONEN DURCH ÜBERTRAGUNG DER STEUERINFORMATIONEN IN EINZELN DEKODIERBAREN PAKETEN
AMELIORATION DE TEMPS D'ATTENTE POUR L'ACQUISITION D'INFORMATIONS DE COMMANDE PAR TRANSMISSION D'INFORMATIONS DE COMMANDE DANS DES PAQUETS POUVANT ETRE DECODES INDIVIDUELLEMENT

(30) Priority: 10.03.2005 US 660866 P
(43) Date of publication of application: 05.12.2007
(73) Proprietor: QUALCOMM INCORPORATED, San Diego, CA 92121 (US)
(72) Inventor: RADHAKRISHNAN, Dhinakar, San Diego, California 92131 (US); COLLINS, Bruce, San Diego, California 92131 (US); GAUTAM, Shusheel, San Diego, California 92130 (US)
(74) Representative: Dunlop, Hugh Christopher
(86) International application number: PCT/US2006/008942
(87) International publication number: WO 2006/099319

(56) References cited:
- US-A1- 2003 035 440
- US-A1- 2003 200 499

## Description

### BACKGROUND

### Field of the Invention

The present invention relates to transmission efficiency in a communications network. More specifically, the present invention relates to reducing acquisition times in a wireless communications network.

### Background Art

FLO is a technology designed primarily for the efficient and economical distribution of the same multimedia content to millions of wireless subscribers simultaneously. The goal of FLO technology is to reduce costs associated with delivering such content and allow users to surf channels of content on the mobile handsets typically used for traditional cellular voice and data services. This multimedia content is also known as services. A service is an aggregation of one or more independent data components. Each independent data component of a service is called a flow.

Services are classified into two types based on their coverage: Wide-area services and Local-area services. A Local-area service is multicast for reception within a metropolitan area. By contrast, Wide-area services arc multicast in one or more metropolitan areas.

FLO services are carried over one or more logical channels, known as MediaFLO™ Logical Channels or MLCs. An MLC may be divided into a maximum of three logical sub-channels. These logical sub-channels are called streams. Each flow is carried in a single stream.

Processing of MLCs in a FLO network is controlled based upon control Protocol information. The control protocol information is transmitted over the air by the network in units call physical layer packets (PLPs). An erroneous physical layer packet received at the FLO device carrying a fragment of this control protocol information will require the device to make another attempt to receive the control protocol information in its entirety. This will result in increased time duration for the device to begin receiving a service.

What is needed, therefore, is a method and system to enable the FLO device to independently decode and process the control information embedded within individual PLPs.
US 2003/0035440 describes that a method for segmented message transmission wherein each message is first divided into segments and the segments arc fragmented.
US 2003/0200499 describes that a method of multicasting data over wireless cellular communication network.

### Brief Summary

The present invention concerns a method for enabling reduction of acquisition latency in a communication network, according to claim 1; a method for reducing acquisition latency in a communication network, according to claim 6; an apparatus for enabling reduction of acquisition latency in a communication network, according to claim 8; an apparatus for reducing acquisition latency in a communication network, according to claim 10; and a computer readable medium, according to claim 15.

The transmission unit of control protocol information is called a control protocol packet (CPPs). When requiring transmission over the air, the CPP is made substantially the same size as the PLP. Control protocol messages carrying the control information are fragmented such that each fragment is contained within a CPP. Header information is added to each CPP to convey to a receiver the total number of packets the control information spans. A CPP identifier is carried to make the device aware of the CPPs received thus far. In the present invention, control protocol messages are designed to allow individual CPPs to contain a meaningful logical fragment of a control protocol message.

Further features and advantages of the present invention as well as the structure and operation of various embodiments of the present invention, are described in detail below with reference to the accompanying drawings.

### BRIEF DESCRIPTION OF THE DRAWINGS

The accompanying drawings, which are incorporated herein and constitute part of the specification, illustrate embodiments of the present invention and, together with the general description given above and the detailed description of the embodiments given below, serve to explain the principles of the invention. In the drawings:

FIG. 1 is an illustration of a network including one embodiment of a content delivery system in accordance with the present invention;

FIG. 2 is an illustration of one embodiment of a content provider suitable for use in the embodiment of FIG. 1;

FIG. 3 is an illustration of one embodiment of a content server suitable for use in one embodiment of the content delivery system;

FIG. 4 is an illustration of a representative super-frame of a transmitted signal within a network;

FIG. 5 is an illustration of the relationship between a flow, a stream, and an MLC. in accordance with principles of the embodiment;

FIG. 6 is an illustration of an exemplary services ID message structured in accordance with the present embodiment;

FIG. 7 is an illustration of an exemplary flow description message structured in accordance with the present embodiment;

FIG. 8 is a block diagram illustration of an exemplary technique to resolve acquisition latency in accordance with the embodiment;

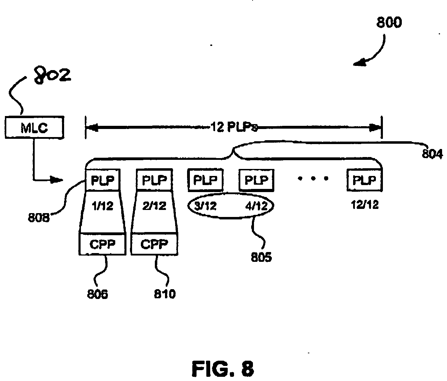

FIC. 9 is a more detailed illustration of the structure of the control protocol packet (CPP) shown in FIG. 8;

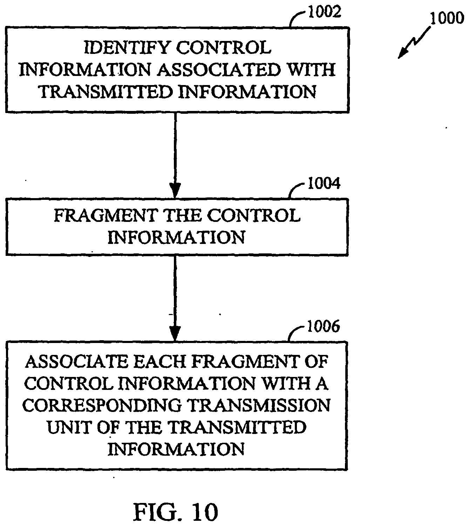

FIG. 10 is a flow diagram of an exemplary method of practicing the embodiment; and

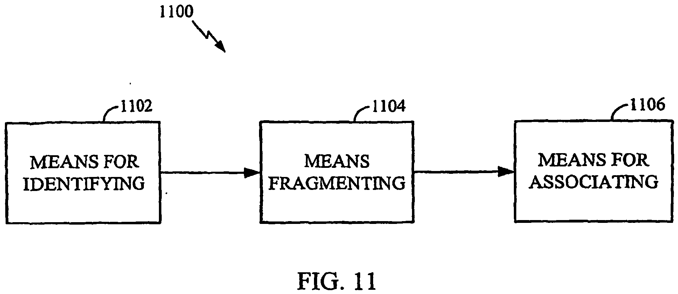

FIG. 11 is a block diagram of an exemplary system in accordance with the embodiment.

### DETAILED DESCRIPTION

This specification discloses one or more embodiments that incorporate the features of this invention. The disclosed embodiment(s) merely exemplify the invention. The scope of the invention is not limited to the disclosed embodiment(s). The invention is defined by the claims appended hereto.

It would be apparent to one skilled in the art that the present invention, as described below, may be implemented in many different embodiments of hardware, software, firmware, and/or the entities illustrated in the drawings. Any actual software code with the specialized controlled hardware to implement the present invention is not limiting of the present invention. Thus, the operation and behavior of the present invention will be described with the understanding that modifications and variations of the embodiments are possible, given the level of detail presented herein.

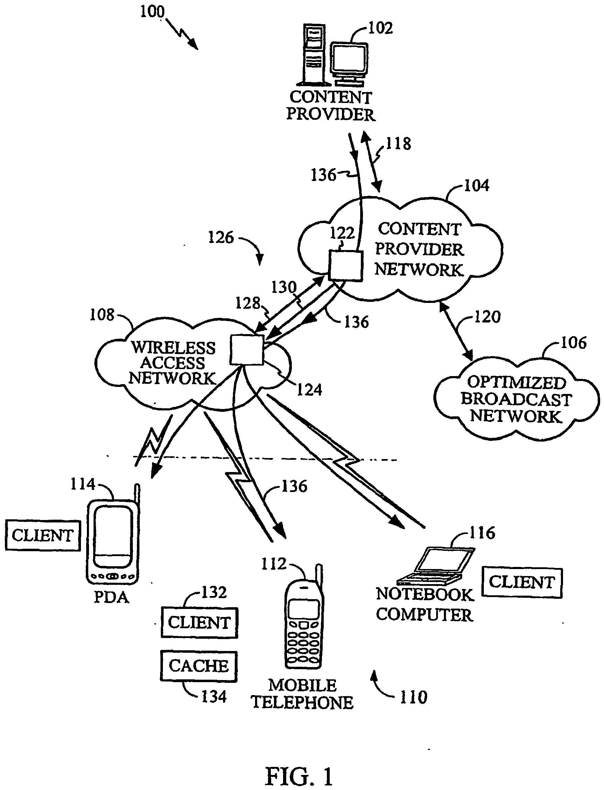

FIG. 1 shows a communication network 100 that comprises a transport system 136 that operates to create and transport multimedia content flows across data networks. For example, the transport system 136 is consistent with the principles of the FLO system, noted above, and is suitable for use in transporting content clips from a content provider network to a wireless access network for broadcast distribution.

The network 100 comprises a content provider (CP) 102, a content provider network 104, an optimized broadcast network 106, and a wireless access network 108. The network 100 also includes devices 110 that comprise a mobile telephone 112, a personal digital assistance (PDA) 114, and a notebook computer 116. The devices 110 illustrate just some of the devices that are suitable for use with the transport system 136. It should be noted that although three devices are shown in FIG. 1, virtually any number of analogous devices, or types of devices are suitable for use in the transport system 136, as would be apparent to those skilled in the relevant art.

The content provider 102 operates to provide content for distribution to users in the network 100. The content comprises video, audio, multimedia content, clips, real-time and non real-time content, scripts, programs, data or any other type of suitable content. The content provider 102 provides the content to the content provider network 104 for distribution. For example the content provider 102 communicates with the content provider network 104 via the communication link 118, which comprises any suitable type of wired and/or wireless communication link.

The content provider network 104 comprises any combination of wired and wireless networks that operate to distribute content for delivery to users. The content provider network 104 communicates with the optimized broadcast network 106 via the link 120. The link 120 comprises any suitable type of wired and/or wireless communication link. The optimized broadcast network 106 comprises any combination of wired and wireless networks that are designed to broadcast high quality content. For example, the optimized broadcast network 106 may be a specialized proprietary network that has been optimized to deliver high quality content to selected devices over a plurality of optimized communication channels.

The transport system 136 operates to deliver content from the content provider 102 for distribution to a content server (CS) 122 at the content provider network 104 that operates to communicate with a broadcast base station (BBS) 124 at the wireless access network. The CS 122 and the BBS 124 communicate using one or more embodiments of a transport interface 126 that allows the content provider network 104 to deliver content in the form of content flows to the wireless access network 108 for broadcast/multicast to the devices 110. The transport interface 126 comprises a control interface 128 and a bearer channel 130. The control interface 128 operates to allow the CS 122 to add, change, cancel, or otherwise modify contents flows that flow from the content provider network 104 to the wireless access network 108. The bearer channel 130 operates to transport the content flows from the content provider network 104 to the wireless access network 108.

The CS 122 uses the transport interface 126 to schedule a content flow to be transmitted to the BBS 124 for broadcast/multicast over the wireless access network 108. For example, the content flow may comprise a non real-time content clip that was provided by the content provider 102 for distribution using the content provider network 104. The CS 122 operates to negotiate with the BBS 124 to determine one or more parameters associated with the content clip. Once the BBS 124 receives the content clip, it broadcasts/multicasts the content clip over the wireless access network 108 for reception by one or more of the devices 110. Any of the devices 110 may be authorized to receive the content clip and cache it for later viewing by the device user.

In the foregoing example, the device 110 comprises a client program 132 that operates to provide a program guide that displays a listing of content that is scheduled for broadcast over the wireless access network 108. The device user may then select to receive any particular content for rendering in real-time or to be stored in a cache 134 for later viewing. For example the content clip may be scheduled for broadcast during the evening hours, and the device 112 operates to receive the broadcast and cache the content clip in the cache 134 so that the device user may view the clip the next day. Typically, the content is broadcast as part of a subscription service and the receiving device may need to provide a key or otherwise authenticate itself to receive the broadcast.

The transport system 136 allows the CS 122 to receive program-guide records, program contents, and other related information from content provider 102. The CS 122 updates and/or creates content for delivery to devices 110.

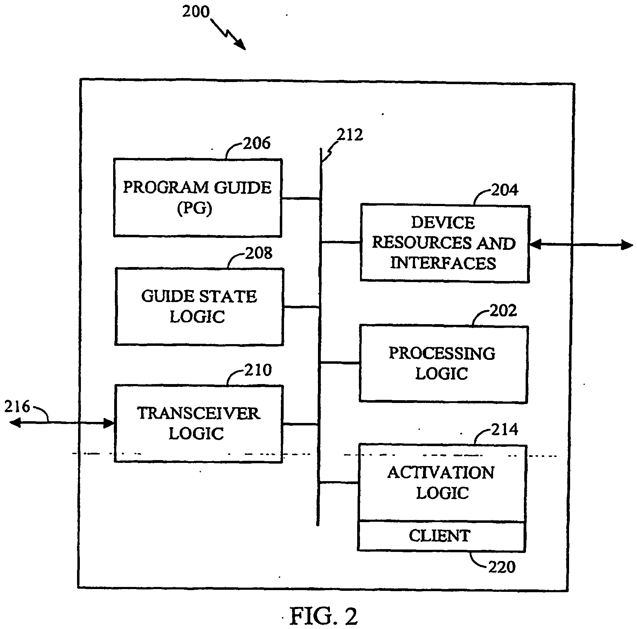

FIG. 2 shows a content provider server 200 suitable for use in the content delivery system. For example, the server 200 may be used as the server 102 in FIG. 1. The server 200 comprises processing logic 202, resources and interfaces 204, and transceiver logic 210, all coupled to an internal data bus 212. The server 200 also comprises activation logic 214, PG 206; and Guide State logic 208, which are also coupled to the data bus 212.

The processing logic 202 comprises a central processing unit (CPU), processor, gate array, hardware logic, memory elements, virtual machine, software, and/or any combination of hardware and software. Thus, the processing logic 202 generally comprises logic to execute machine-readable instructions and to control one or more other functional elements of the server 200 via the internal data bus 212.

The resources and interfaces 204 comprise hardware and/or software that allow the server 200 to communicate with internal and external systems. For example, the internal systems may include mass storage systems, memory, display driver, modem, or other internal device resources. The external systems may include user interface devices, printers, disk drives, or other local devices or systems.

The transceiver logic 210 comprises hardware logic and/or software that operates to allow the server 200 to transmit and receive data and/or other information with remote devices or systems using communication channel 216. For example, the communication channel 216 comprises any suitable type of communication link to allow the server 200 to communicate with a data network.

The activation logic 214 comprises a CPU, processor, gate array, hardware logic, memory elements, virtual machine, software, and/or any combination of hardware and software. The activation logic 214 operates to activate a CS and/or a device to allow the CS and/or the device to select and receive content and/or services described in the PG 206. The activation logic 214 transmits a client program 220 to the CS and/or the device during the activation process. The client program 220 runs on the CS and/or the device to receive the PG 206 and display information about available content or services to the device user. Thus, the activation logic 214 operates to authenticate a CS and/or a device, download the client 220, and download the PG 206 for rendering on the device by the client 220.

The PG 206 comprises information in any suitable format that describes content and/or services that are available for devices to receive. For example, the PG 206 may be stored in a local memory of the server 200 and may comprise information such as content or service identifiers, scheduling information, pricing, and/or any other type of relevant information. The PG 206 comprises one or more identifiable sections that are updated by the processing logic 202 as changes are made to the available content or services.

The PG record 208 comprises hardware and/or software that operates to generate notification messages that identify and/or describe changes to the PG 206. For example, when the processing logic 202 updates the PG 206, the guide state logic 208 is notified about the changes. The guide state logic 208 then generates one or more notification messages that are transmitted to CSs, which may have been activated with the server 200, so that these CSs are promptly notified about the changes to the PG 206.

As part of the content delivery notification message, a broadcast indicator is provided that indicates when a section of the PG identified in the message will be broadcast. For example, the broadcast indicator may comprise one bit to indicate that the section will be broadcast and a time indicator that indicates when the broadcast will occur. Thus, the CSs and/or the devices wishing to update their local copy of the guide state 208 can listen for the broadcast at the designated time to receive the updated section of the PG records.

In one embodiment, the content delivery notification system comprises program instructions stored on a computer-readable media, which when executed by a processor, for instance, the processing logic 202, provides the functions of the server 200 described herein. For example, the program instructions may be loaded into the server 200 from a computer-readable media, such as a floppy disk, CDROM, memory card, FLASH memory device, RAM, ROM, or any other type of memory device or computer-readable media that interfaces to the server 200 through the resources 204. In another embodiment, the instructions may be downloaded into the server 200 from an external device or network resource that interfaces to the server 200 through the transceiver logic 210. The program instructions, when executed by the processing logic 202, provide a guide state notification system as described herein.

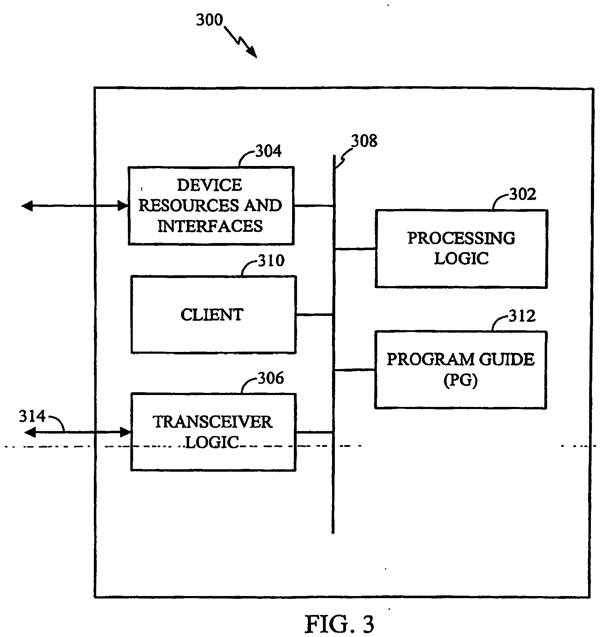

FIG. 3 shows a content server (CS) or device 300 suitable for use in a content delivery system. For example, CS 300 may be the CS 122 shown in FIG. 1. The CS 300 comprises processing logic 302, resources and interfaces 304, and transceiver logic 306, all coupled to a data bus 308. The CS 300 also comprises a client 310, and a program guide (PG) 312, which are also coupled to the data bus 308.

The processing logic 302 comprises a CPU, processor, gate array, hardware logic, memory elements, virtual machine, software, and/or any combination of hardware and software. Thus, the processing logic 302 generally comprises logic configured to execute machine-readable instructions and to control one or more other functional elements of the CS 300 via the internal data bus 308.

The resources and interfaces 304 comprise hardware and/or software that allow the CS 300 to communicate with internal and external systems. For example, internal systems may include mass storage systems, memory, display driver, modem, or other internal device resources. The external systems may include user interface devices, printers, disk drives, or other local devices or systems.

The transceiver logic 306 comprises hardware and/or software that operate to allow the CS 300 to transmit and receive data and/or other information with external devices or systems through communication channel 314. For example, the communication channel 314 may comprise a network communication link, a wireless communication link, or any other type of communication link.

During operation, the CS 300 is activated so that it may receive available content or services over a data network. For example, the CS 300 identifies itself to a content provider server during an activation process. As part of the activation process, the CS 300 receives and stores PG records by Program Guide (PG) 312. The PG 312 contains information and logic that identifies content or services available for the CS 300 to receive. The client 310 operates to render information in the PG 312 on the CS and/or the device 300 using the resources and interfaces 304. For example, the client 310 renders information in the PG 312 on a display screen that is part of the device. The client 310 also receives user input through the resources and interfaces so that a device user may select content or services.

The CS 300 receives notification messages through the transceiver logic 306. For example, the messages may be broadcast or unicast to the CS 300 and received by the transceiver logic 306. The PG notification messages identify updates to the PG records at the PG 312. In one embodiment, the client 310 processes the PG notification messages to determine whether the local copy at the PG 312 needs to be updated. For example, in one embodiment, the notification messages include a section identifier, start time, end time, and version number.

The CS 300 operates to compare the information in the PG notification messages to locally stored information at the existing PG 312. If the CS 300 determines from the PG notification messages that one or more sections of the local copy at the PG 312 needs to be updated, the CS 300 operates to receive the updated sections of the PG in one of several ways. For example, the updated sections of the PG may be broadcast at a time indicated in the PG notification messages, so that the transceiver logic 306 may receive the broadcasts and pass the updated sections to the CS 300, which in turn updates the local copy at the PG 312.

The CS 300 determines which sections of the PG need to be updated based on the received PG update notification messages, and transmits a request to a CP server to obtain the desired updated sections of the PG. For example, the request may be formatted using any suitable format and comprise information such as a requesting CS identifier, section identifier, version number, and/or any other suitable information.

The CS 300 performs one or more of the following functions in one or more embodiments of a PG notification system. It should be noted that the following functions might be changed, rearranged, modified, added to, deleted, or otherwise adjusted within the scope of the invention.

1. The CS is activated for operation with a content provider system to receive content or services. As part of the activation process, a client and PG are transmitted to the CS.

2. One or more PG notification messages are received by the CS and used to determine if one or more sections of the locally stored PG need to be updated.

3. In one embodiment, if the CS determines that one or more sections of the locally stored PG need to be updated, the CS listens to a broadcast from the distribution system to obtain the updated sections of the PG that it needs to update its local copy.

4. In another embodiment, the CS transmits one or more request messages to the CP to obtain the updated sections of the PG it needs.

5. In response to the request, the CP transmits the updated sections of the PG to the CS.

6. The CS uses the received updated sections of the PG to update its local copy of the PG.

The content delivery system comprises program instructions which may be stored on a computer-readable media, which when executed by a processor, such as the processing logic 302, provides the functions of the content delivery notification system as described herein. For example, instructions may be loaded into the CS 300 from a computer-readable media, such as a floppy disk, CDROM, memory card, FLASH memory device, RAM, ROM, or any other type of memory device or computer-readable media that interfaces to the CS 300 through the resources and interfaces 304. In another embodiment, the instructions may be downloaded into the CS 300 from a network resource that interfaces to the CS 300 through the transceiver logic 306. The instructions, when executed by the processing logic 302, provide a content delivery system as described herein.

It should be noted that the CS 300 represents just one implementation and that other implementations are possible within the scope of the invention.

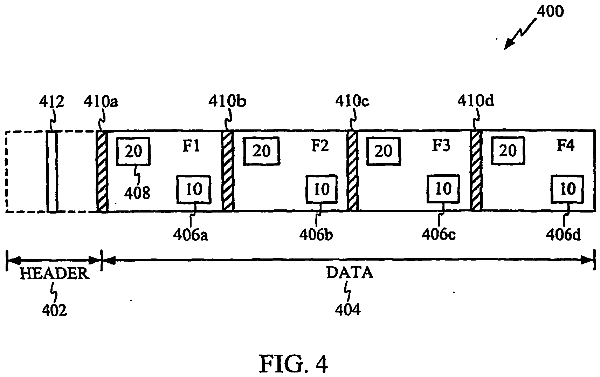

FIG. 4 is an illustration of a representative super-frame 400 of a transmitted signal within the network 100. For purposes of illustration, signal transmission throughout the network 100 can occur in accordance with orthogonal frequency division multiplexing (OFDM) principles. Transmitted signals in the network 100 are organized into super-frames, which are units of data transmission in a physical layer of the network 100. As well understood by those of skill in the art, the network physical layer provides the channel structure, frequency, power output, modulation and encoding specification for the network's Forward Link.

As mentioned above, the FLO based network 100 multicasts several services as an aggregation of one or more independent data components. Each independent data component is called a flow and can include a video component, audio component, text or signaling component of a service. FLO services are carried over one or more logical channels in MLCs.

In the exemplary illustration of FIG. 4, the representative super-frame 400 includes an header portion 402 and a data portion 404. The data portion 404 is further subdivided to include data frames F1-F4. At the physical layer of the network 100, MLCs are transported within the data portion 404. As a practical matter, a single MLC.. will be divided across the data frames F1-F4. In the exemplary data portion 404 of FIG. 4, two MLCs (10 and 20) are divided across the data frames F1-F4. That is, one fourth of the content of each of the MLCs 10 and 20 is carried in each of the frame F1-F4, respectively.

For example, the MLC having identification (ID) 10 is divided into portions 406a - 406d, each corresponding to one of the frames F1-F4. The frame F1 also includes an MLC portion 408, which corresponds to the MLC 20, in addition to the portion 406a, which corresponds to the MLC 10.

Also, within the data portion 404, each of the frames F1-F4 of the super-frame 400 includes respective control channels 410a- 410d that carry important information regarding transmission characteristics of a respective portion of the MLCs (e.g. MLCs 10 and 20) included within the respective frame.

The header portion 402 of the super-frame 400 includes an overhead information symbols (OIS) channel 412. The OIS channel 412, among other things, informs the device 112 of the location of the MLC 10 within the super-frame 400. Thus, when the device 112 initially requests service, it must first decode the OIS channel 412 within the super-frame 400 to know the precise location, and other characteristics, related to the MLC 10 before data within the MLC 10 can be unpacked and used.

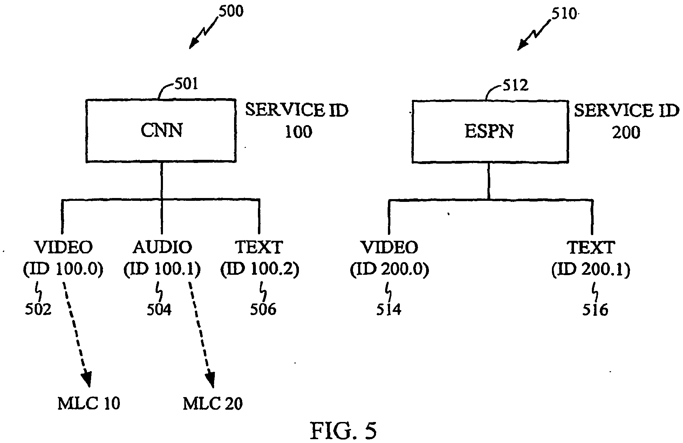

From another perspective, an MLC is a logical grouping at the physical layer that is configured to carry unique data. At the application layer, data, also known as flows, are carried in entities known as streams. The Application layer provides services for an application to ensure that effective communication with another application program in a network is possible. The streams are in turn carried in MLCs. For example, a single MLC can carry up to three streams (i.e., up to three different flows of different application level data). FIG. 5 is an illustration of the relationship between a flow, a stream, and an MLC in accordance with principles of the present invention.

In FIG. 5, an exemplary flow arrangement 500 might include information downloaded to the device 112 from a video mobile service 501 provided, for example, by the Cable News Network (CNN). This CNN broadcast can include application level data in the form of a video flow 502, an audio flow 504, and a text flow 506. Thus, each of the flows 502, 504 and 506, carrying unique data, will be transmitted in the physical layer of the network 100 within the uniquely identifiable MLC 10.

In FIG. 5, the video flow 502 is associated with a unique flow ID 100.0 and is transported in the MLC 10. The audio flow 504 is associated with a flow ID 100.1 and is transported in MLC 20. Correspondingly, the text flow 506 is associated with a flow ID of 100.2, but is not shown to be associated with a particular MLC. Similarly, the video mobile service 501, representing CNN, is associated with a unique service ID 100.

Also in FIG. 5, a second exemplary flow arrangement 510 can include a service 512 provided, for example, by ESPN. For purposes of illustration, the ESPN service 512 is associated with a service ID 200. The ESPN service 512 includes a video flow 514, having flow ID 200.0, and an audio flow 516 having a flow ID 200.1.

As a practical matter, the device 112 will first request information to be downloaded, for example, from the CNN mobile service 501. Before the device 112 can begin receiving either the video flow 502 or the audio flow 504, the device 112 will first need to map the requested flows (502 and 504) to their associated MLC (MLCs 10 and 20, respectively) and then receive the MLCs 10 and 20 at the physical layer of the network 100. The information to accomplish this is contained within the control channel 410a.

By way of review, the OIS channel 412 includes information related to the location of the MLCs 10 and 20 within the super-frame 400. Additionally the OIS channel 412 includes information to assist the device 112 to properly decode and receive the control channel 410a (located within each of the frames F1-F4).

The control channel 410a includes essential information regarding flow- to-MLC mapping. The control channel 410a also includes information regarding transmission characteristics of the particular MLCs, such as MLC 10 and 20, so that once the flow mapping is determined by the device 112, the device 112 can physically tune to and receive the MLCs. For example, part of this physical tuning might include instructions from the device to the physical layer of the network 100 on how to send and receive associated data bits, associated with a selected one of the flows (e.g. the video flow 502 and/or audio flow 504) over the air.

The OIS channel 412, on the other hand, has its own fixed transmit mode. By way of example, the fixed transmit mode associated with the super-frame 400 includes quadrature phase shift keying (QPSK) at a rate of one fifth. As soon the device 112 is activated, it immediately knows the transmit mode of the OIS channel 412 and can immediately tune thereto. Once tuned to the OIS channel 412, the device 112 reads the OIS channel 412 to receive further instructions regarding how to receive and decode the control channel 410a.

The OIS channel 412 is structured to tell the device 112, for example, that to see control channel 410a, the device 112 must transmit in accordance with specific transmission parameters. By transmitting in accordance with these specific parameters, the device 112 is able receive the control channel 410a, and the control protocol information therein, and read the flow-to-MLC mapping. The control channel 410a of FIG. 4, for example, will include a flow description message describing how particular flows, such as the video flow 502 (flow ID 100.0) and the audio flow 504 (flow ID 100.1), map to particular MLCs.

In the example of the super-frame 400 of FIG. 4, the video flow 502 (flow ID 100.0) and audio flow 504 (flow ID 100.1) map to the MLC 10 and the MLC 20, respectively. Once the device 112 has received the control protocol information in its entirety, including the flow description message, it can then decode and unpack the MLC 10 and the MLC 20 and provide service to the user.

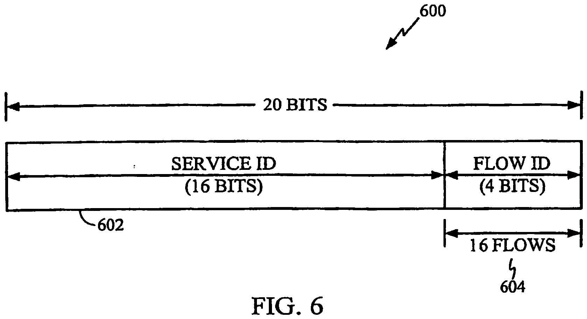

FIG. 6 is an illustration of an exemplary service ID message 600 arranged in accordance with the present invention. Within the network 100, the service IDs and flow IDs, shown in FIG. 5, are both packed into a single 20 bit wide message having a service ID portion 602 and a flow ID portion 604. Thus, in this example of the flow description message 600, a single service ID, such as the service ID 100 representing CNN, can accommodate up to 16 unique flows. The service ID message 600 is embedded within the flow description message that will be forwarded to the devices 110.

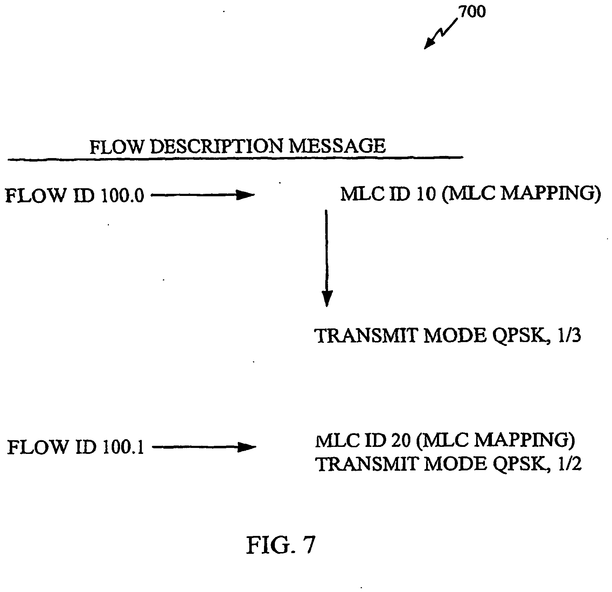

FIG. 7 is an illustration of an exemplary flow description message 700 in accordance with the present invention. As shown in FIG. 7, the flow description message 700 might be associated with the CNN service ID 100 of FIG. 5. Thus, when one of the devices 110, such as the device 112, receives the flow description message 700, it will first receive the flow ID 100.0. The flow ID 100.0 (i.e., video) maps to the MLC 10.

Now that the device 112 knows that its requested service is included in the MLC 10, it also knows that in order to receive the service, it has to configure for a transmit mode including, for example, QPSK modulation with a rate of one third. Other transmit parameters are included in the information related to the transmit mode, such as the encoding scheme.

Next, the device 112 will receive the flow ID 100.1 (i.e., audio) and its mapping to the MLC 20. Consequently, the device 112 will receive the transmit information indicating, for example, that to receive the MLC 20 the device 112 will have to operate using quadrature amplitude modulation (QAM) at a rate of one half. After the device 112 begins operation in accordance with this information it can begin to download the requested service information.

Before any of the devices 110 can begin to receive and decode any particular MLC, the control protocol information with the control channel 410a must be received in its entirety. Within conventional systems, the control data can accumulate, due to acquisition latency, and may span several super-frames. Thus, it can take a device several seconds to download all of the control information and begin transmitting a service. This several second time span increases the probability of the control information being corrupted or otherwise incomplete. If the control information is corrupted or incomplete in any way, the device cannot use it. Instead, the device must wait for a subsequent super-frame to begin the process of receiving the OIS and control channels anew, resulting in service delays for the user.

The flow description message 700 is transported at the physical layer of the network 100. As well understood by those of skill in the art, the network physical layer provides the channel structure, frequency, power output, modulation and encoding specification for the network's forward link. Within the network 100, this physical layer assumes the responsibility of obtaining an MLC and transmitting the MLC over the air.

In a conventional network, an MLC is transmitted over the air in PLPs. Data from an MLC for a particular super-frame might be broken, for example, into three packets. Each of the three packets can then be transmitted over the air individually. On a receive side, once each of the three packets has been received, they will be accumulated and associated with the particular MLC. The problem is, however, if any one of the packets has been interrupted during transmission (e.g., due to transmission anomalics), the entire MLC will be unusable.

Thus, over the course of an entire period of one second (a reasonable time span for a typical super-frame), an MLC has a high likelihood of corruption or interruption. Assume, for example, that a single MLC may span 12 PLPs for over the air transmission. Then, if any one of the 12 PLPs is corrupted, the chain of MLC information will be lost and the device will be required to wait for the next super-frame to repeat this process. That is, none of the individual PLPs of a conventional network has valuable information independent from the remaining PLPs within a sequence. The present invention, as shown in the exemplary illustration of FIG. 8, provides a remedy to this dilemma.

FIG. 8 is a block diagram illustration of an exemplary technique 800 to resolve the challenges associated with acquisition latency encountered in conventional networks. In FIG. 8, an MLC 802 includes service information requested by a device, such as the device 112. Data within the MLC 802 is fragmented into 12 PLPs 804 in preparation for transmission over the air. Each of the 12 PLPs is marked with specific sequence (fractional) information 805 such that if any one of the PLPs 804 is lost during transmission, the missing one of the PLPs 804 can be readily identified at the receive side. Any missing PLPs can later be recovered during a transmission reattempt. Also, a receiver, within the device 112, knows the total number of PLPs required to form a complete segment.

In the exemplary embodiment of FIG. 8, the MLC 802 is fragmented into the individual logical entities, known as CPPs, such as a CPP 806. Since the CPP 806 is its own logical entity, it includes readily usable information, separate and apart from any other CPP. Similarly, a subsequent portion of the MLC 802 is fragmented to form a CPP 810, also separately usable.

The CPP 806 and the CPP 810 can be separately transmitted and received, independent from each other. That is, the portion of the MLC 808 fragmented to form the CPP 806 might be lost during a transmission sequence. If, however, the CPP 810 was not lost and was received on the receive side, the portion of the MLC represented by the CPP 806, will be usable. Since each of the CPPs 806 and 810, and any others and any others within a sequence, are separate logical entities and independently usable, acquisition latency can be reduced.

Acquisition latency is reduced because although some of the PLPs may be lost during transmission, those PLPs that were actually received can still be used. For example, if PLPs 3/12 and 4/12 of the PLPs 804 were corrupted during transmission, but the remainder of the PLPs 804 were received, the device 112 can still receive the requested service.

In the embodiment of FIG. 8, the CPPs 806 and 810 are substantially equal in length to each of the PLPs. Within the network 100, the CPPs are carried in the physical layer of the network and are configured to be consistent with PLP boundaries.

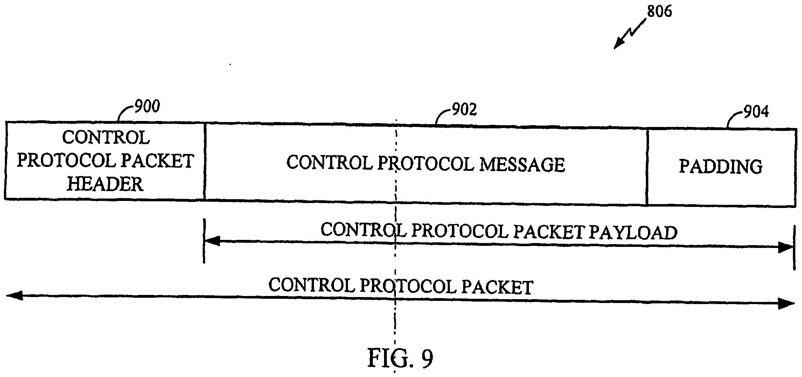

FIG. 9 is a more detailed illustration of the structure of the CPP 806. As shown in FIG. 9, the CPP 806 includes a control protocol packet header 900 and a control protocol message 902. The header 900 carries information about which fragment the CPP 806 is carrying (e.g., 1/12, 2/12, 5/12 etc.) and what specific data or information it includes. The CPP 806 also includes a data link padding portion 904. Presence of the padding portion 904 implies that in an attempt to configure the CPP 806 as a logical entity, the last padding portion 904 might not be available for use to pack actual data.

FIG. 10 is a flow diagram of an exemplary method 1000 of practicing an embodiment of the present invention. In FIG. 8, to enhance acquisition latency in a communications network, a receiver will desirably identify control information associated with transmitted information as indicated in step 1002. Next, the control information will be fragmented as shown in step 1004 and each fragment will be associated with a corresponding transmission unit of the transmitted information, as indicated in step 1006.

FIG. 11 is a block diagram of an exemplary system 1100 in accordance with the embodiment. In FIG. II means for identifying 1102 identify control information associated with transmitted Information. Means for fragmenting 1104 fragment the identified control information. Means for associating 1106 then associate each fragment with a corresponding transmission unit of the transmitted information.

The present invention enables a FLO device to independently process control information embedded in individual PLPs. The PLPs are also individually usable and decodable. This independent processing and decoding ability facilitates a reduction of acquisition time at the FLO device within a FLO based communications network.

The present invention has been described above with the aid of functional building blocks illustrating the performance of specified functions and relationships thereof. The boundaries of these functional building blocks have been arbitrarily defined herein for the convenience of the description. Alternate boundaries can be defined so long as the specified functions and relationships thereof are appropriately performed.

One skilled in the art will recognize that these functional building blocks can be implemented by analog and/or digital circuits, discrete components, application-specific integrated circuits, firmware, processor executing appropriate software, and the like, or any combination thereof. Thus, the breadth and scope of the present invention should not be limited by any of the above-described exemplary embodiments, but is limited only by the scope of the following claims.

## Claims

1. A method for enabling reduction of acquisition latency in a communications network adapted for multicast distribution of multimedia content to multiple subscribers simultaneously over a logical channel (802), wherein the multimedia content is an aggregation of independent data components, referred hereinafter as 'flows', comprising:
identifying control protocol information associated with information for transmission, the information for transmission including a plurality (804) of transmission units (808), wherein the control protocol information includes flow-to-logical channel mapping;
fragmenting the control protocol information and associating each fragment (806, 810) of the control protocol information with a corresponding transmission unit (808), wherein the control protocol information is fragmented into individual logical entities (806, 810) such that each transmission unit (808) is marked with fractional information (805); and
transmitting each transmission unit and its associated control protocol information.

2. The method according to claim 1, wherein the corresponding transmission unit is a physical layer packet, PLP, of a superframe.

3. The method according to claim 1, wherein the control protocol information is related to a mediaflo logical channel, MLC.

4. The method according to claim 3, wherein the control protocol information includes flow-to-MLC mapping data.

5. The method according to claim 1, wherein wireless information is transmitted across the network in accordance with orthogonal frequency division multiplexing, OFDM, principles.

6. A method for reducing acquisition latency in a communication network, comprising:
receiving multimedia content as an aggregation of independent data components, referred hereinafter as 'flows', in units (808), the received information having associated control protocol information, wherein the control protocol information includes flow-to-logical channel mapping and comprises a plurality of fragments each being an individual logical entity (806, 810) associated with a corresponding unit of received information (808), each unit of received information (808) marked with fractional information (805); and
recovering each unit of received transmitted information based on a corresponding control protocol information fragment by decoding the unit at an application layer separate from other units of received information in the same logical channel (802).

7. The method according to claim 6, wherein the transmitted information and associated control protocol information are wirelessly received.

8. An apparatus for enabling reduction of acquisition latency in a communications network adapted for multicast distribution of multimedia content to multiple subscribers simultaneously over a logical channel (802), wherein the multimedia content is an aggregation of independent data components, referred hereinafter as 'flows', comprising:
means for identifying control protocol information associated with information for transmission, the information for transmission including a plurality of transmission units (804), wherein the control protocol information includes flow-to-logical channel mapping;
means for fragmenting the control protocol information and associating each fragment (806, 810) of the control protocol information with a corresponding transmission unit (808), wherein the control protocol information is fragmented into individual logical entities (806, 810) such that each transmission unit (808) is marked with fractional information (805); and
means for transmitting each transmission unit and its associated control protocol information.

9. The apparatus according to claim 8, wherein the corresponding transmission unit is a physical layer packet, PLP, of a super-frame.

10. An apparatus for reducing acquisition latency in a communication network, comprising:
means for receiving multimedia content as an aggregation of independent data components, referred hereinafter as 'flows', in units (808), the received information having associated control protocol information, wherein the control protocol information includes flow-to-logical channel mapping and comprises a plurality of fragments each being an individual logical entity (806, 810) associated with a corresponding unit of received information (808), each unit of received information (808) marked with fractional information (805); and
means for recovering each unit of received transmitted information based on a corresponding control protocol information fragment by decoding the unit at an application layer separate from other units of received information in the same logical channel (802).

11. The apparatus according to claim 10. wherein the transmitted information and associated control protocol information are wirelessly received.

12. The apparatus according to claim 11, wherein the control protocol information is related to a mediaflo logical channel, MLC.

13. The apparatus according to claim 12, wherein the control protocol information includes flow-to-MLC mapping data.

14. The apparatus according to claim 10, wherein wireless information is transmitted across the network in accordance with orthogonal frequency division multiplexing, OFDM, principles.

15. A computer readable medium comprising code for causing a computer to perform a method of any of the claims 1-5 or 6-7.

## Patentansprüche

1. Ein Verfahren zum Ermöglichen einer Reduktion einer Akquisitionslatenz in einem Kommunikationsnetzwerk, das für eine Mehrfachverteilung bzw. Multicast-Distribution von Multimediainhalten an mehrere Teilnehmer gleichzeitig über einen logischen Kanal (802) ausgelegt ist, wobei die Multimediainhalte eine Aggregation von unabhängigen Datenkomponenten sind, die im Folgenden als "Flüsse" bzw. "Ströme" bezeichnet sind, wobei das Verfahren Folgendes aufweist:
Identifizieren von Steuerprotokollinformation, die mit Information zur Sendung bzw. Übertragung assoziiert ist, wobei die Information zur Übertragung eine Vielzahl (804) von Übertragungseinheiten (808) aufweist, wobei die Steuerprotokollinformation ein Abbilden von einem Strom auf einen logischen Kanal aufweist;
Fragmentieren von Steuerprotokollinformation und Assoziieren jedes Fragments (806, 810) der Steuerprotokollinformation mit einer entsprechenden Übertragungseinheit (808), wobei die Steuerprotokollinformation in individuelle logische Einheiten (806, 810) fragmentiert ist, so dass jede Übertragungseinheit (808) mit partieller Information (805) gekennzeichnet ist; und
Übertragen jeder Übertragungseinheit und ihrer assoziierten Steuerprotokollinformation.

2. Verfahren nach Anspruch 1, wobei die entsprechende Übertragungseinheit ein Paket der physischen Schicht bzw. ein PLP (PLP = physical layer packet) eines Superrahmens ist.

3. Verfahren nach Anspruch 1, wobei die Steuerprotokollinformation mit einem Medienstrom-Logikkanal bzw. MLC (MLC = mediaflo logical channel) in Verbindung steht.

4. Verfahren nach Anspruch 3, wobei die Steuerprotokollinformation Strom-zu-MLC-Abbildungsdaten aufweist.

5. Verfahren nach Anspruch 1, wobei Drahtlosinformation über das Netzwerk gemäß Orthogonalfrequenz-Multiplexing-Prinzipien bzw. OFDM-Prinzipien (OFDM = orthogonal frequency division multiplexing) übertragen wird.

6. Ein Verfahren zum Reduzieren einer Akquisitionslatenz in einem Kommunikationsnetzwerk, das Folgendes aufweist:
Empfangen von Multimediainhalten als eine Aggregation von unabhängigen Datenkomponenten, die im Folgenden als "Ströme" bezeichneten werden in Einheiten (808), wobei die empfangene Information assoziierte Steuerprotokollinformation aufweist, wobei die Steuerprotokollinformation eine Strom-auf-Logikkanal-Abbildung aufweist und eine Vielzahl von Fragmenten aufweist, wobei jedes davon eine individuelle logische Einheit (806, 810) ist, die mit einer entsprechenden Einheit von empfangener Information (808) assoziiert ist, wobei jede Einheit von empfangener Information (808) mit partieller Information (805) gekennzeichnet ist; und
Wiedererlangen jeder Einheit von empfangener gesendeter Information basierend auf einem entsprechenden Steuerprotokollinformationsfragment durch Decodieren der Einheit auf einer Anwendungsschicht, und zwar separat von anderen Einheiten an empfangener Information in dem gleichen logischen Kanal bzw. Logikkanal (802).

7. Verfahren gemäß Anspruch 6, wobei die übertragene Information und assoziierte Steuerprotokollinformation drahtlos empfangen werden.

8. Eine Vorrichtung zum Ermöglichen einer Reduktion einer Akquisitionslatenz in einem Kommunikationsnetzwerk, das für eine Mehrfachverteilung bzw. Multicast-Distribution von Multimediainhalten an mehrere Teilnehmer gleichzeitig über einen logischen Kanal (802) ausgelegt ist, wobei die Multimediainhalte eine Aggregation von unabhängigen Datenkomponenten sind, die im Folgenden als "Ströme" bezeichnet sind, wobei das Verfahren Folgendes aufweist:
Mittel zum Identifizieren von Steuerprotokollinformation, die mit Information zur Sendung bzw. Übertragung assoziiert ist, wobei die Information zur Übertragung eine Vielzahl von Übertragungseinheiten (804) aufweist, wobei die Steuerprotokollinformation ein Abbilden von einem Strom auf einen logischen Kanal aufweist;
Mittel zum Fragmentieren von Steuerprotokollinformation und Assoziieren jedes Fragments (806, 810) der Steuerprotokollinformation mit einer entsprechenden Übertragungseinheit (808), wobei die Steuerprotokollinformation in individuelle logische Einheiten (806, 810) fragmentiert wird, so dass jede Übertragungseinheit (808) mit partieller Information (805) gekennzeichnet ist; und
Mittel zum Übertragen jeder Übertragungseinheit und ihrer assoziierten Steuerprotokollinformation.

9. Vorrichtung nach Anspruch 8, wobei die entsprechende Übertragungseinheit ein Paket der physischen Schicht bzw. ein PLP (PLP = physical layer packet) eines Superrahmens ist.

10. Eine Vorrichtung zum Reduzieren einer Akquisitionslatenz in einem Kommunikationsnetzwerk, die Folgendes aufweist:
Mittel zum Empfangen von Multimediainhalten als eine Aggregation von unabhängigen Datenkomponenten, die im Folgenden als "Ströme" bezeichneten werden in Einheiten (808), wobei die empfangene Information assoziierte Steuerprotokollinformation aufweist, wobei die Steuerprotokollinformation eine Strom-auf-Logikkanal-Abbildung aufweist und eine Vielzahl von Fragmenten aufweist, wobei jedes davon eine individuelle logische Einheit (806, 810) ist, die mit einer entsprechenden Einheit von empfangener Information (808) assoziiert ist, wobei jede Einheit von empfangener Information (808) mit partieller Information (805) gekennzeichnet ist; und
Mittel zum Wiedererlangen jeder Einheit von empfangener gesendeter Information basierend auf einem entsprechenden Steuerprotokollinformationsfragment durch Decodieren der Einheit auf einer Anwendungsschicht, und zwar separat von anderen Einheiten an empfangener Information in dem gleichen logischen Kanal (802).

11. Vorrichtung nach Anspruch 10, wobei die übertragene Information und assoziierte Steuerprotokollinformation drahtlos empfangen werden.

12. Vorrichtung nach Anspruch 11, wobei die Steuerprotokollinformation mit einem Medienstrom-Logikkanal bzw. MLC (MLC = mediaflo logical channel) in Verbindung steht.

13. Vorrichtung nach Anspruch 12, wobei die Steuerprotokollinformation Stromzu-MLC-Abbildungsdaten aufweist.

14. Vorrichtung nach Anspruch 10, wobei Drahtlosinformation über das Netzwerk gemäß Orthogonalfrequenz-Multiplexing-Prinzipien bzw. OFDM-Prinzipien (OFDM = orthogonal frequency division multiplexing) übertragen wird.

15. Computerlesbares Medium, das Code aufweist, um zu bewirken, dass ein Computer ein Verfahren nach einem der Ansprüche 1-5 oder 6-7 ausführt.

## Revendications

1. Procédé permettant la réduction du temps d'attente d'acquisition dans un réseau de télécommunications adapté pour la distribution en diffusion groupée d'un contenu multimédia vers plusieurs abonnés simultanément sur une voie logique (802), dans lequel le contenu multimédia est une agrégation de composants de données indépendants, appelés ci-après "flux", comprenant :
l'identification d'une information de protocole de commande associée à une information à transmettre, l'information à transmettre comprenant une pluralité (804) d'unités de transmission (808), dans lequel l'information de protocole de commande comprend une mappe flux vers voie logique ;
la fragmentation de l'information de protocole de commande et l'association de chaque fragment (806, 810) de l'information de protocole de commande avec une unité de transmission correspondante (808), dans lequel l'information de protocole de commande est fragmentée en entités logiques individuelles (806, 810) de telle manière que chaque unité de transmission (808) est marquée avec une information fractionnée (805) ; et
la transmission de chaque unité de transmission et de son information de protocole de commande associée.

2. Procédé selon la revendication 1, dans lequel l'unité de transmission correspondante est un paquet de couche physique, PLP, d'une super trame.

3. Procédé selon la revendication 1, dans lequel l'information de protocole de commande se rapporte à une voie logique MediaFLO, MLC.

4. Procédé selon la revendication 3, dans lequel l'information de protocole de commande comprend des données de mappe flux vers MLC.

5. Procédé selon la revendication 1, dans lequel de l'information sans fil est transmise sur le réseau selon des principes de multiplexage par répartition orthogonale de la fréquence, OFDM.

6. Procédé de réduction du temps d'attente d'acquisition dans un réseau de communication, comprenant :
la réception d'un contenu multimédia sous la forme d'une agrégation de composants de données indépendants, appelés ci-après "flux", en unités (808), l'information reçue comportant une information de protocole de commande associée, dans lequel l'information de protocole de commande comprend une mappe flux vers voie logique et comprend une pluralité de fragments qui sont chacun une entité logique individuelle (806, 810) associée à une unité correspondante d'information reçue (808), chaque unité d'information reçue (808) étant marquée avec une information fractionnée (805) ; et
la récupération de chaque unité d'information transmise reçue, basée sur un fragment d'information de protocole de commande correspondant en décodant l'unité au niveau d'une couche d'application séparée des autres unités d'information reçue dans la même voie logique (802).

7. Procédé selon la revendication 6, dans lequel l'information transmise et l'information de protocole de commande associée sont reçues au moyen d'une technologie sans fil.

8. Dispositif permettant la réduction du temps d'attente d'acquisition dans un réseau de télécommunications adapté pour la distribution en diffusion groupée d'un contenu multimédia vers plusieurs abonnés simultanément sur une voie logique (802), dans lequel le contenu multimédia est une agrégation de composants de données indépendantes, appelés ci-après "flux", comprenant :
un moyen pour identifier une information de protocole de commande associée à une information à transmettre, l'information à transmettre comprenant une pluralité d'unités de transmission (804), dans lequel l'information de protocole de commande comprend une mappe flux vers voie logique ;
un moyen pour fragmenter l'information de protocole de commande et associer chaque fragment (806, 810) de l'information de protocole de commande avec une unité de transmission correspondante (808), dans lequel l'information de protocole de commande est fragmentée en entités logiques individuelles (806, 810) de telle manière que chaque unité de transmission (808) est marquée avec une information fractionnée (805) ; et
un moyen pour transmettre chaque unité de transmission et son information de protocole de commande associée.

9. Dispositif selon la revendication 8, dans lequel l'unité de transmission correspondante est un paquet de couche physique, PLP, d'une super trame.

10. Dispositif permettant la réduction du temps d'attente d'acquisition dans un réseau de communication, comprenant :
un moyen pour recevoir un contenu multimédia sous la forme d'une agrégation de composants de données indépendants, appelés ci-après "flux", en unités (808), l'information reçue comportant une information de protocole de commande associée, dans lequel l'information de protocole de commande comprend une mappe flux vers voie logique et comprend une pluralité de fragments qui sont chacun une entité logique individuelle (806, 810) associée à une unité correspondante d'information reçue (808), chaque unité d'information reçue (808) étant marquée avec une information fractionnée (805) ; et
un moyen pour récupérer chaque unité d'information transmise reçue, basée sur un fragment d'information de protocole de commande correspondant en décodant l'unité au niveau d'une couche d'application séparée des autres unités d'information reçue dans la même voie logique (802),

11. Dispositif selon la revendication 10, dans lequel l'information transmise et l'information de protocole de commande associée sont reçues au moyen d'une technologie sans fil.

12. Dispositif selon la revendication 11, dans lequel l'information de protocole de commande se rapporte à une voie logique MediaFLO, MLC.

13. Dispositif selon la revendication 12, dans lequel l'information de protocole de commande comprend des données de mappe flux vers MLC.

14. Dispositif selon la revendication 10, dans lequel de l'information sans fil est transmise sur le réseau selon des principes de multiplexage par répartition orthogonale de la fréquence, OFDM.

15. Support lisible par un ordinateur, comprenant du code destiné à provoquer l'exécution par un ordinateur d'un procédé selon l'une quelconque des revendications 1 à 5 ou 6 et 7.
